# DEMANDE DE BREVET EUROPEEN

(11) **EP 4 415 369 A1**
(43) Date de publication de la demande: **14.08.2024**
(21) Numéro de dépôt: 24156976.3
(22) Date de dépôt: 12.02.2024
(51) Int. Cl.: H04N 21/258, H04N 21/45, H04N 21/658

(54) **PROCÉDÉ DE SUPERVISION D'UN TERMINAL DE LECTURE DE FLUX MULTIMÉDIA AVEC TEMPORISATION DE LA TRANSMISSION DES DONNÉES DE SUIVI**

(30) Priorité: 13.02.2023 FR 2301316
(71) Demandeur: Orange, 92130 Issy-les-Moulineaux (FR)
(72) Inventeur: RIVOALEN, Mathieu, 92326 CHATILLON CEDEX (FR); MARCHAND, Hervé, 92326 CHATILLON CEDEX (FR)
(74) Mandataire: Regimbeau

(57) **Abrégé**

Procédé de supervision d'un terminal de lecture (10 ; MOB, TV, ORD) de flux multimédia, à travers un réseau de télécommunication (NET), comportant des étapes de :
- recueil de données de suivi destinées à au moins un serveur de suivi (STT, STM) connecté au réseau de télécommunication (NET),
- mémorisation de ces données de suivi dans une mémoire tampon (14) dudit terminal de lecture,
- vérification d'un critère de charge des ressources du terminal de lecture (10 ; MOB, TV, ORD), et
- transmission d'au moins une partie des données de suivi vers le ou les serveurs de suivi (STT, STM) lorsque ce critère est rempli.

## Description

### DOMAINE DE L'INVENTION

La présente invention concerne le domaine des terminaux lecteurs de flux multimédia. Il s'applique en particulier aux terminaux installés chez des utilisateurs finaux pour leur permettre de visualiser des contenus vidéo diffusés par des serveurs de contenu, tels que des chaînes de télévision, de la vidéo à la demande, etc.

Elle concerne plus particulièrement la supervision à distance de ces terminaux et de la ou des applications installées sur ces terminaux, au moyen de données de suivi transmises par les applications à destination de serveurs de suivi.

En effet, tout produit informatique se doit aujourd'hui d'être supervisé par la remontée de données d'usage ou techniques afin d'améliorer sa durabilité et son efficacité. Une application rendant un service à un utilisateur engendre la remontée d'autant de données de suivi qu'il y a de fonctionnalités. Or les équipements tels que les terminaux de lecture de flux multimédia disposent d'un nombre grandissant de fonctionnalités.

La remontée de données de suivi nécessite la transmission de requêtes, généralement selon le protocole HTTP, vers plusieurs serveurs de suivi. Ces transmissions empiètent sur les ressources du terminal de lecture, qu'il s'agisse des ressources propres du terminal (circuits de traitement de l'information, CPU...), ou des ressources de connexion réseau (bande passante...)

Il existe donc un besoin d'améliorer les propositions actuelles de l'état de la technique.

### RESUME DE L'INVENTION

L'invention vise à réduire l'impact de la remontée des données de suivi sur l'expérience des utilisateurs. En particulier, elle vise à minimiser l'impact sur les ressources computationnelles des terminaux et sur la bande passage du lien des terminaux vers le réseau d'accès.

À ces fins, selon un premier aspect, la présente invention peut être mise en oeuvre par un procédé de supervision d'un terminal de lecture de flux multimédia, à travers un réseau de télécommunication, comportant des étapes de :
- recueil de données de suivi destinées à au moins un serveur de suivi connecté audit réseau de télécommunication,
- mémorisation desdites données de suivi dans une mémoire tampon dudit terminal de lecture,
- vérification d'un critère de charge des ressources dudit terminal de lecture,
- transmission d'au moins une partie desdites données de suivi vers ledit au moins un serveur de suivi lorsque ledit critère est rempli

Suivant des modes de réalisation préférés, l'invention comprend une ou plusieurs des caractéristiques suivantes qui peuvent être utilisées séparément ou en combinaison partielle entre elles ou en combinaison totale entre elles :
- on mémorise de façon distinctive des données d'un premier type (par exemple de suivi technique) et des données d'un second type (par exemple de suivi d'usage), et lesdites données du premier type sont transmises en priorité lorsque ledit critère est rempli. Cela permet notamment d'une part d'affiner la gestion de différents types de données de suivi, mais aussi de permettre une intervention plus rapide en fonction d'un type de données de suivi (typiquement des données de suivi technique, sans que les données de suivi d'usage pénalisent ce suivi technique en occupant trop la bande passante).
- on mémorise les données du premier type (par exemple de suivi technique) et les données du second type (par exemple de suivi d'usage) dans deux mémoires tampon distinctes. Un avantage de ce mode de réalisation est notamment d'affiner la gestion des différents types de données et, le cas échéant, de mettre en place des politiques différentes de gestion des mémoires tampons en fonction du type de données de suivi.
- lesdites ressources comprennent une charge des circuits de traitement dudit terminal. Cela permet notamment de prendre en compte le fait que la transmission des données de suivi nécessite un traitement computationnel qui peut pénaliser les autres utilisations des circuits de traitement notamment pour la diffusion de contenu multimédia.
- lesdites ressources comprennent une bande-passante vers ledit réseau de télécommunication. Un avantage de ce mode de réalisation est notamment de prendre en compte l'utilisation de la bande passage par la remontée des données d'usage qui peut empiéter sur la bande passante disponible pour la réception des flux multimédia
- ledit critère de charge comprend le maintien d'une charge au-dessous d'un seuil donné pendant une période donnée. Un avantage de ce mode de réalisation est notamment de se prémunir des fluctuations instantanées de la charge.
- le procédé de supervision comporte en outre des étapes de surveillance de la localisation d'un pointeur dans une interface homme-machine dudit terminal de lecture, et de déclenchement de la transmission d'au moins une partie desdites données de suivi vers ledit au moins un serveur de suivi lorsque ladite localisation est dans une zone prédéterminée. La zone prédéterminée peut par exemple correspondre à une zone autour d'une icône ou menu dont la sélection entraine la fermeture de l'application Un avantage de cette mise en oeuvre est d'éviter qu'un trop grand nombre de données de suivi soient perdues du fait de cette fermeture.

Un autre aspect de l'invention concerne un terminal de lecture de flux multimédia comprenant au moins une interface vers un réseau de télécommunication et comprenant un processeur configuré pour réaliser les étapes suivantes :
- recueil de données de suivi destinées à au moins un serveur de suivi connecté audit réseau de télécommunication,
- mémorisation desdites données de suivi dans une mémoire tampon dudit terminal de lecture,
- vérification d'un critère de charge des ressources dudit terminal de lecture,
- transmission d'au moins une partie desdites données de suivi vers ledit au moins un serveur de suivi lorsque ledit critère est rempli.

Un autre aspect de l'invention concerne un programme d'ordinateur apte à être mis en oeuvre sur un terminal de lecture de flux multimédia, le programme comprenant des instructions de code qui, lorsqu'il est exécuté par un processeur, réalise les étapes du procédé tel que précédemment défini.

Un autre aspect de l'invention concerne un support de données sur lequel a été mémorisé au moins une série d'instructions de code de programme pour l'exécution d'un procédé tel que précédemment défini.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES FIGURES

Les dessins annexés illustrent l'invention :
la figure 1 illustre un contexte de mise en oeuvre d'un procédé de supervision d'un terminal de lecture de flux multimédia,
la figure 2 schématise une architecture fonctionnelle d'un terminal de lecture de flux multimédia ;
la figure 3 illustre un exemple d'interface graphique pouvant être affiché par un écran associé à un terminal de lecture de flux multimédia ;
les figures 4a à 4f illustrent un exemple de cheminement, ordonné dans le temps, d'un utilisateur dans l'interface homme-machine affichée par un terminal de lecture.

### DESCRIPTION DETAILLEE DE MODES DE REALISATION DE L'INVENTION

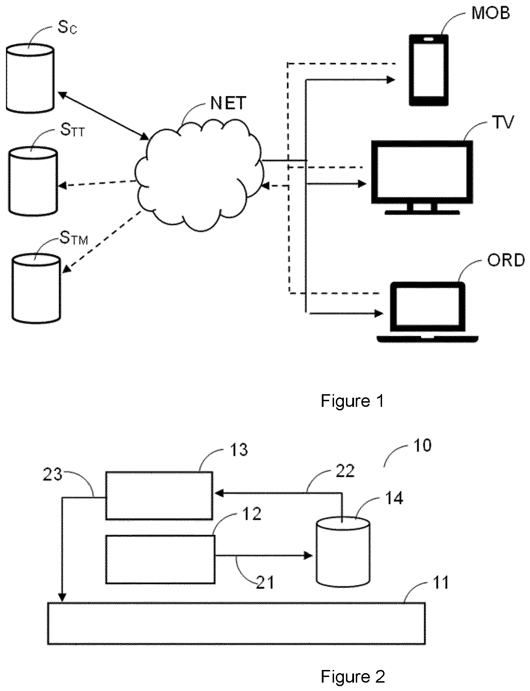

La figure 1 illustre un contexte de mise en oeuvre d'un procédé de supervision d'un terminal de lecture de flux multimédia.

Elle s'applique à différents types de terminaux de lecture de flux multimédia, tel que notamment un terminal mobile MOB, une téléviseur connecté TV ou un ordinateur ORD.

Le terminal mobile MOB est typiquement un téléphone intelligent de type « smartphone » ou une tablette numérique, adapté pour recevoir des flux multimédias et à les produire sur une interface du terminal ou connecté audit terminal.

Le téléviseur TV peut être nativement connecté ou l'être par le truchement d'un dispositif associé tel que par exemple une clé HDMI connecté au téléviseur.

Un exemple de dispositif externe communiquant avec un téléviseur TV est Chromecast. Le Chromecast est un appareil lecteur de flux multimédias (passerelle multimédia) en temps réel développé et commercialisé par Google. L'appareil se branche sur le port HDMI d'un téléviseur et communique, par connexion Wi-Fi, avec un autre appareil connecté à Internet (ordinateur, smartphone, tablette...), afin d'afficher sur le téléviseur le contenu multimédia reçu depuis une application compatible avec la technologie Google Cast, depuis le navigateur Google Chrome présent sur un ordinateur, ou depuis certains appareils Android.

Dans ce dernier cas, le terminal de lecture de flux, ou contenus, multimédia peut être ce dispositif associé.

Les flux multimédias comprennent typiquement des flux (ou contenus) vidéo ou audio-vidéo. Il peut également s'agir de flux audio (musique, émissions radio...), ou de contenus interactifs (y compris jeux).

Les terminaux peuvent recevoir ces flux multimédias d'un serveur de contenu Sc au travers d'un réseau de télécommunication NET auquel ils sont connectés, de façon connue en soi. Ce réseau de télécommunication peut être composé de plusieurs réseaux interconnectés, notamment d'un réseau local, d'un réseau d'accès et d'un réseau étendu de type « Internet ».

Le réseau local peut être un réseau installé chez un utilisateur lui permettant de connecter différents terminaux à un point d'accès qui forme passerelle vers un réseau d'accès au réseau étendu. Un tel réseau local peut être de différentes technologies, par exemple Wi-Fi, Ethernet^{™}, etc.

Selon d'autres mode de réalisation, le serveur de contenu Sc peut être accessible directement par le réseau local de l'utilisateur.

Dans l'exemple de la figure 1, les flèches pleines représentent les échanges entre les terminaux MOB, TV, ORD et le serveur de contenu Sc Ces échanges comprennent la transmission d'un contenu, ou flux, multimédia depuis le serveur de contenu Sc vers les terminaux. Ils comprennent aussi des messages de commande transmis par ces terminaux vers le serveur de contenu. Ces messages de commande sont notamment prévus pour permettre le choix d'un flux multimédia.

Par ailleurs, les terminaux MOB, TV, ORD transmettent des données de suivi, ou traçage, vers un ou plusieurs serveurs de suivi, S_{TT}, S_{TM}. Dans l'exemple de la figure 1, ces transmissions sont représentées par les flèches en pointillés.

En effet, un suivi, ou traçage, est communément mis en place pour superviser à distance le comportement d'équipements ou d'applications logicielles. Ce suivi peut viser différents objectifs, en particulier :
- la remontée de données d'usage, afin de connaître, statistiquement, le comportement des utilisations de l'équipement et/ou de l'application logicielle et d'éventuellement influer ainsi sur le développement de version ultérieure ;
- la remontée de données techniques, permettant d'obtenir le comportement, d'un point de vue technique, de l'équipement et/ou de l'application logicielle. Le but est ici de repérer des erreurs, de déceler des problèmes de performances, etc.

D'une façon générale, des données de différents types peuvent ainsi être prises en considération et faire l'objet de traitement distincts. En particulier, un premier type correspond à des données de suivi technique et un second type à des données de suivi d'usage.

D'une façon générale, le suivi d'usage peut être destiné à un service marketing en charge de la conception de nouvelles fonctionnalités ou de nouveaux développements à mener, tandis que le suivi technique peut être destiné à un service technique pour la maintenance de la version actuelle du dispositif ou de l'application logicielle ou pour corriger certains problèmes dans une version ultérieure.

Dans l'exemple de la figure, on a donc considéré deux serveurs de suivi distincts pour ces deux types de données.

Il est toutefois possible de regrouper ces deux types de données de suivi vers un unique serveur de suivi. Il est également possible de considérer d'autres types de données de suivi et d'autres serveurs de suivi. Comme il apparaîtra, le procédé de supervision est indépendant du type et du nombre des données de suivi et des serveurs de suivi, S_{TT}, S_{TM}.

La figure 2 schématise une architecture fonctionnelle d'un terminal de lecture de flux multimédia 10.

Un terminal de lecture de flux multimédia 10 est un dispositif de traitement de l'information.

Un tel dispositif de traitement de l'information comprend typiquement un (ou plusieurs) microprocesseurs, une (ou plusieurs) mémoires et des circuits électriques permettant leur connexion ou remplissant d'autres fonctionnalités. En particulier, un tel dispositif de traitement de l'information peut comporter des circuits spécifiques adaptés pour la connexion aux réseaux de télécommunication NET (interfaces Wi-Fi, Ethernet^{™}, etc.), pour le décodage à la volée de flux vidéo, etc.

Ces aspects étant connus de l'homme du métier, ils ne seront pas davantage décrits dans la présente demande.

Des logiciels sont exécutés sur cette architecture matérielle pour lui permettre d'assurer les fonctions attendues.

D'un point de vue fonctionnel, ces logiciels comprennent un système d'exploitation 11 et des applications logicielles.

Ces applications logicielles peuvent être de diverses natures. Elles comprennent des applications logicielles adaptées pour les fonctionnalités d'un terminal de lecture de flux vidéo.

Sur la figure 2 sont représentés deux blocs fonctionnels 12, 13. Ces blocs fonctionnels peuvent être des applications indépendantes ou des modules (ou fonction) d'une même application.

Un bloc fonctionnel 12 peut être prévu pour effectuer le suivi, ou traçage, de l'activité sur le terminal 10.

Ce bloc fonctionnel 12 peut être, ou faire partie, de l'application en charge de la lecture des flux multimédia. Il peut aussi être distinct et collaborer avec cette application afin de disposer des informations nécessaires pour remplir son rôle de suivi.

Le bloc fonctionnel 12 peut être adapté pour recueillir des informations lui permettant de définir des données de suivi.

Le recueil d'information peut être déclenché à chaque action, ou commande, de l'utilisateur au moyen de l'interface homme-machine du terminal 10. Cette commande peut consister en une sélection, ou « clic », d'une icône mais aussi simplement en son survol, selon les modalités propres à l'interface.

Le recueil d'information peut être déclenché de façon périodique ou par d'autres événements ne dépendant pas des actions de l'utilisateur.

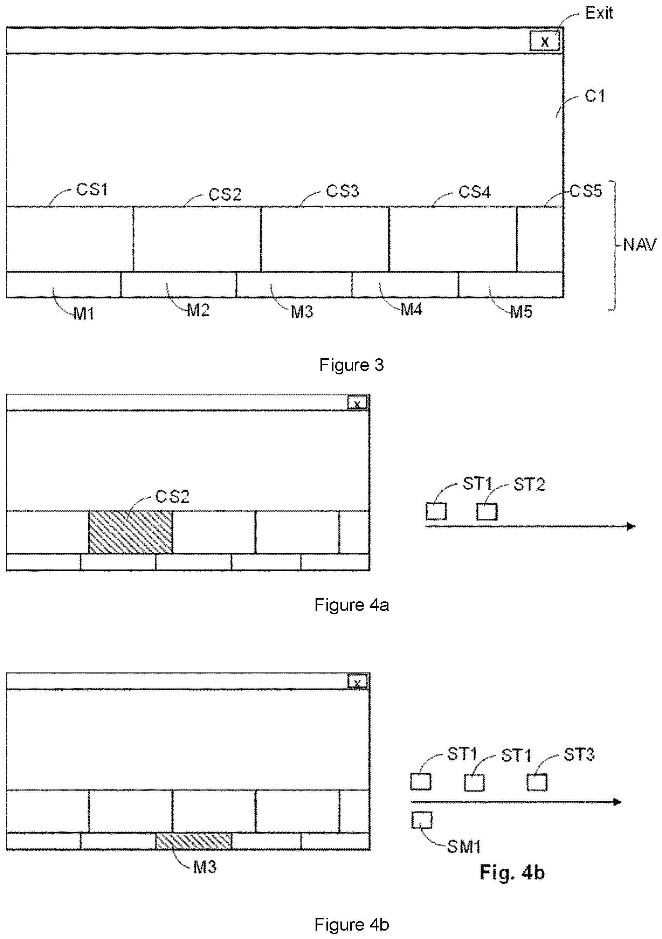

La figure 3 illustre un exemple d'interface graphique pouvant être affiché par un écran associé au terminal de lecture de flux multimédia 10.

Cette interface graphique peut afficher, de façon concomitante, un contenu, ou flux, vidéo dans une zone C1, et une zone de navigation NAV permettant des interactions avec l'utilisateur du terminal et permettant notamment de changer le flux vidéo à afficher dans la zone C1.

La zone de navigation NAV comporte un ensemble de zones CS1, CS2, CS3, CS4, CS5 destinées à l'affichage de flux, ou contenus, vidéos secondaires. Ces contenus secondaires peuvent par exemple correspondre à d'autres chaînes de télévision.

La sélection d'une zone secondaire peut déclencher l'affichage du contenu vidéo secondaire dans la zone principale C1. Le contenu précédemment affiché dans cette zone principale C1 peut alors être affiché dans une zone secondaire. L'utilisateur peut ainsi zapper d'un contenu vidéo à un autre vidéo au moyen de cette interface graphique.

La zone de navigation peut également comporter des menus M1, M2, M3, M4, M5, permettant d'autres options de navigation, par exemple de changer de source de contenu multimédia : il peut par exemple s'agir de se connecter à un autre serveur de contenu Sc, de récupérer des contenus multimédias stockés localement, etc.

L'interface graphique peut comporter d'autres éléments non représentés sur la figure : menus, déroulants ou autres, accessibles par exemple au moyen de la sélection d'un menu M1, M2, ML3, M4, M5, ou d'une touche d'une télécommande associée au terminal 10, etc. Ces éléments peuvent permettre d'accéder à encore d'autres options, par exemple à l'ensemble des chaînes de télévision disponible.

Le suivi vise typiquement à connaître le comportement de l'utilisateur avec cette interface homme-machine (suivi d'usage) et le comporte de l'application logicielle à travers les choix opérés par l'utilisateur (suivi technique).

En fait, différents types de suivi peuvent être réalisés, et différentes politiques de suivi peuvent être également mises en oeuvre. Le procédé de supervision proposé peut s'adapter à différents types de suivi et à diverses politiques de suivi.

En revenant à la figure 2, le bloc fonctionnel 12 peut recueillir des informations de suivi lorsqu'un événement survient. Cet événement peut être la sélection, ou éventuellement, le simple survol au moyen d'un dispositif de pointage (tel une télécommande) d'un élément CS1, CS2, CS3, CS4, CS5, M1, M2, M3, M4, M5 peut déclencher le recueil d'informations de suivi.

Le bloc fonctionnel 12 peut alors mémoriser les données de suivi 21 dans une mémoire tampon 14. Ces données de suivi peuvent correspondre à tout ou partie des informations de suivi, au sein desquelles une sélection ou un prétraitement peut être opéré. En outre, les données de suivi peuvent contenir des données ajoutées par le bloc fonctionnel 12 telles que notamment un horodatage.

Les données de suivi sont mémorisées par bloc ou enregistrement : chaque enregistrement dans la mémoire de tampon correspond à une suite de données unitaires telles qu'un horodatage, le type d'événement qui a déclenché la génération, des données contextuelles (état de l'interface, identifiant de la zone sélectionnée par l'utilisateur ou portant un focus, etc.), etc.

Ces données de suivi 21 peuvent être destinées à différents serveurs de suivi, S_{TT}, S_{TM} ainsi qu'il est connu de l'homme du métier.

Dans un exemple de réalisation, il peut être prévu de mémoriser de façon distinctive des données de suivi d'usage et des données de suivi techniques. Les données de suivi d'usage sont destinées à être transmises à un serveur de suivi d'usage S_{TM}, et les données de suivi techniques sont destinées à un serveur de suivi technique S_{TT}.

Cette distinction peut être réalisée en attribuant une valeur appropriée d'un champ de l'enregistrement des données de suivi dans la mémoire tampon 14. Elle peut également être réalisée en mémorisant les données de suivi dans des parties distinctes de la mémoire tampon 14, ou encore dans deux mémoires tampons distinctes.

Ces données de suivi 21 sont mémorisées et ne sont pas destinées à être transmises immédiatement vers les serveurs de suivi. En effet, selon le procédé de supervision proposé, la transmission des données de suivi vers les serveurs de suivi n'est déclenchée qu'à des moments opportuns correspondant à un état de charge du terminal de lecture de flux multimédias 10.

Un bloc fonctionnel 13 est adapté pour vérifier un critère de charge des ressources du terminal 10.

Cette vérification peut être périodique, selon une périodicité prédéfinie. Elle peut aussi être déclenchée par certains événements survenant sur le terminal 10.

Les ressources du terminal sont notamment la charge des circuits de traitement de données du terminal 10 et en particulier du circuit principal ou CPU (pour « Computer Processing Unit » en anglais), et la bande-passante vers le réseau de télécommunication NET. En particulier, la bande-passante vers le réseau de télécommunication peut être la bande-passante du lien montant, c'est-à-dire correspondant à la transmission d'information depuis le terminal 10 vers les équipements du réseau de télécommunication 10.

Le procédé de supervision exposé comprend également la transmission d'au moins une partie de ces données de suivi vers le, ou les, serveurs de suivi S_{TT}, S_{TM} lorsque le critère prévu est rempli.

La transmission de données de suivi est donc subordonnée au remplissage d'un critère particulier lié à la charge des ressources du terminal de lecture 10.

Selon un mode de réalisation, la transmission de données de suivi est subordonnée à l'état de la charge des circuits de traitement du terminal de lecture 10 et à la bande passante vers le réseau de télécommunication. Comme indiqué précédemment, une seule de ces charges peut être pris en considération. Il peut également être prévu de prendre en compte d'autres charges qui impacterait les performances du terminal de lecture 10.

Le critère peut être basé sur une stabilisation d'un état de charge en dessous d'un seuil donné. Un tel critère est rempli lorsque la charge considérée (bande-passante réseau, charge du CPU, ou autre) est en dessous de ce seuil pendant une durée donnée. Ce mécanisme permet de se prémunir des fluctuations instantanées de la charge, inhérente à ce type de terminaux de lecture.

De cette façon, le procédé de supervision permet de ne transmettre des données suivies qu'aux moments opportuns où leur transmission impacte a minima les performances du terminal de lecture, et, du coup, l'expérience de l'utilisateur de ce terminal de lecture.

En particulier, il évite que la transmission des données de suivi impacte la bande-passante de la connexion avec le réseau de télécommunication et donc la réception des flux multimédia.

Il évite également que cette transmission impacte la navigation sur l'interface graphique (surcharge du réseau, augmentation de la latence...). Comme il a été précédemment vu, chaque action de l'utilisateur peut générer une ou plusieurs enregistrements de données de suivi (typiquement des données de suivi techniques et des données de suivi d'usage). Aussi, lorsque l'utilisateur navigue pour rechercher un contenu multimédia particulier, un grand volume de données de suivi peut ainsi être généré. Dès lors, la mémorisation en mémoire tampon et la transmission vers les serveurs de suivi aux moments opportuns permet d'éviter que cette navigation soit trop ralentie par la transmission au fil de l'eau de ces très nombreuses données de suivi.

D'une façon générale, on évite ou limite la réduction de la capacité du terminal de lecture à rendre les services prévus à l'utilisateur.

Lorsque le critère prévu est rempli, le bloc fonctionnel 13 peut récupérer des données de suivi 22 mémorisées dans la mémoire tampon 14 (ou les mémoires tampons), afin de les transmettre, 22, vers les serveurs de suivi au travers du réseau de télécommunication. Dans l'exemple illustratif de la figure 2, la transmission de ces données de suivi 22 se fait à travers du système d'exploitation 11 qui gère la pile protocolaire et les interfaces vers ce réseau de télécommunication. La transmission se fait bloc de données par bloc de données, puisque chaque bloc de données forme un ensemble cohérent comportant les données unitaires relatives à un même événement.

Selon un mode de réalisation, seule une partie des données de suivi est transmise à chaque vérification du critère de charge (c'est-à-dire un nombre de blocs, ou enregistrement, de données de suivi).

Selon un mode de réalisation, un nombre prédéfini de données de suivi peut être transmis à chaque fois. Par exemple, à chaque fois que le critère est vérifié et est rempli, le bloc fonctionnel 13 transmet deux données de suivi technique et deux données de suivi d'usage.

Selon un mode de réalisation, ce nombre peut dépendre de la charge des ressources. Ainsi, moins élevée est cette charge, plus le bloc fonctionnel 13 peut transmettre de données de suivi.

Selon un mode de réalisation, les données de suivi d'usage et les données de suivi techniques sont mémorisés distinctivement et les données de suivi techniques sont transmises en priorité, lorsque le critère est rempli. On peut en effet considérer que les données de suivi techniques peuvent nécessiter une réaction à plus court terme, dans le cas où elles reflèteraient un dysfonctionnement de l'application et/ou du terminal de lecture.

Selon un mode de réalisation, on peut évaluer le nombre d'enregistrements de données de suivi technique et de données de suivi d'usage et prioritiser celles mémorisées en plus grand nombre dans la mémoire tampon 14.

Il apparaît donc que différentes stratégies peuvent être déployées pour sélectionner les données de suivi à transmettre lorsque le critère de charge est vérifié et rempli.

Les données de suivi peuvent être mémorisées dans la mémoire tampon sous la forme d'une file. Les données de suivi sélectionnées pour transmission peuvent être choisies selon leur horodatage, de sorte que les plus anciennes sont sélectionnées préférentiellement (file « FIFO » pour « first in, first out »).

La transmission des données de suivi vers le ou les serveurs de suivi S_{TT}, S_{TM} peut comprendre la mise en forme de messages au format approprié pour leur transmission via le réseau de télécommunication NET.

Typiquement, ces messages sont des requêtes conformes au protocole HTTP (pour « Hypertext Transfer Protocol » en anglais). Ce protocole est bien connu de l'homme du métier et spécifié dans sa version actuelle dans les RFC 7230 à 7237 de l'IETF (Internet Engineering Task Force).

Les données de suivi d'usage peuvent être transmises par une méthode « GET » du protocole HTTP.

Avec la méthode GET, les données à envoyer au serveur sont écrites directement dans l'URL. Une requête GET contient un ensemble de paramètres séparés par un caractère d'échappement « & ». Ces paramètres peuvent constituer l'ensemble des données de suivi d'un enregistrement 21 dans la mémoire tampon. Ces paramètres sont typiquement au format « type de paramètre = valeur du paramètre ».

Ainsi, un exemple simplifié d'une telle requête peut être

GET https://analyse.exemple.com/collect?t=event&ec=homepage &ea=live

Cette requête comporte en premier lieu l'adresse du serveur de suivi d'usage, ici donné par son URL : analyse.exemple.com. Elle comprend aussi des paramètres indiquant que l'utilisateur a mis le focus sur « toutes les chaines en direct » (« live ») sur la page d'accueil (« homepage »).

Les données de suivi technique peuvent être transmis par une méthode « POST »

La méthode POST écrit les paramètres URL dans la requête HTTP pour le serveur, au sein d'un corps de message compris entre des caractères d'échappement « { » et « } ».

Un exemple simplifié de message transmettant des données de suivi technique peut être de type :
POST https://datacollector.exemple.com/track

{"version":"a.b.c","timestamp":1667474446560,"eventType":"info","device":{"id ":"eid123445","version":"2.1.3.456(124ezfzdczdze22)","model":"Produit1","mac":" aa: bb: cc: dd: ee:ff'}, "appl ication": {"name": "appname", "version": "1 .2. 3(080223)"}, "in fo": {"do": "tech", "m e": "conf", "de": {"cf": [{"f i le": "hom epage.j son", "vers ion":"1. 0. 0"}]}}}

La partie « ":{"cf":[{"file":"homepage.json" » indique que l'interface homme-machine a affiché la page d'accueil « homepage ». Les autres paramètres indiquent le type de terminal, sa version, le nom et la version de l'application, l'horodatage des données de suivi, etc.

Ces exemples sont volontairement simplifiés, car de nombreux autres paramètres peuvent être mémorisés par le bloc fonctionnel 12 puis transmis par le bloc fonctionnel 13, afin de capturer au mieux le contexte lié au suivi.

En effet, que cela soit pour des données de suivi d'usage ou de données de suivi technique, il est important pour les serveurs de suivi de disposer d'un grand nombre de données contextuelles afin de pouvoir exploiter au mieux ces remontées.

Il apparaît donc clairement que les données de suivi transmises aux serveurs de suivi peuvent représenter des volumes conséquents, de sorte que le déport de ces transmissions aux moments opportuns présente un avantage technique important pour la charge des ressources du terminal (réseau et computationnelles).

Les figures 4a à 4f illustrent un exemple de cheminement, ordonné dans le temps, d'un utilisateur dans l'interface homme-machine affichée par le terminal de lecture 10. L'interface de cet exemple est similaire à celle de l'exemple de la figure 3.

Sur ces figures, on représente en regard de chaque état de l'interface, les données de suivi technique et d'usage mémorisés dans la mémoire tampon. La flèche illustre la direction du temps et donc l'ordre dans lequel les données de suivi sont insérés dans la mémoire. On considère que ces données sont insérées et consommées sous forme d'une file.

Dans un état initial de la figure 4a, le focus de l'interface est sur le contenu secondaire CS2, ce qui génère deux blocs de données de suivi technique ST1, ST2.

En figure 4b, l'utilisateur a déplacé le focus sur le menu M3. Cela génère un nouveau bloc de données de suivi technique ST3, et un nouveau bloc de données de suivi d'usage SM1. Comme l'utilisateur est en train de naviguer, le critère de charge n'est pas rempli et les données de suivi ne sont pas transmises.

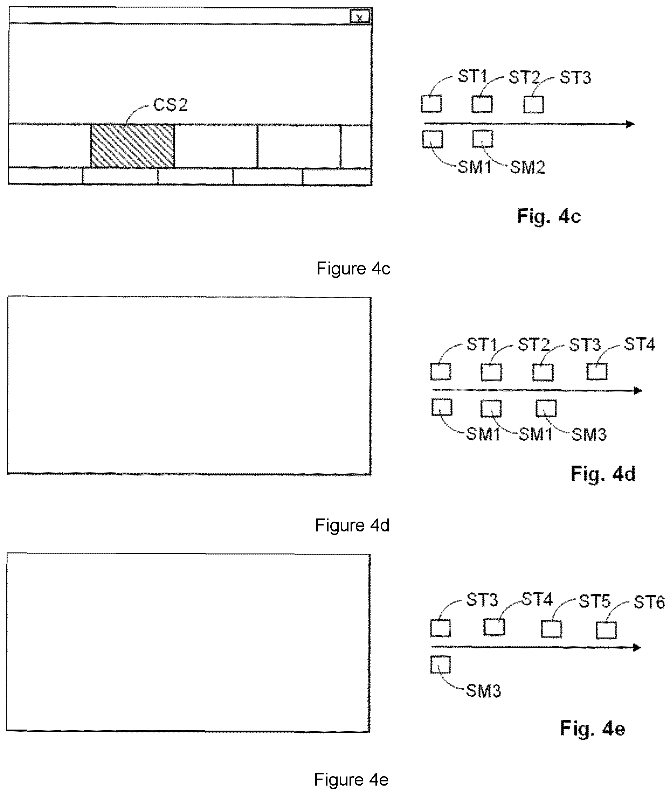

En figure 4c, l'utilisateur a déplacé le focus sur la zone CS2 correspondant à un contenu vidéo secondaire. Cela génère un nouveau bloc de données de suivi d'usage SM2. Comme l'utilisateur est en train de naviguer, le critère de charge n'est pas rempli et les données de suivi ne sont pas transmises.

En figure 4d, l'utilisateur a sélectionné ce contenu vidéo secondaire et l'affichage ne comprend qu'une unique zone dans laquelle ce contenu est devenu contenu principal. Il s'agit là, typiquement, d'un mode où l'utilisateur regarde un programme vidéo sans naviguer dans l'interface. Ce basculement provoque la génération d'un nouveau bloc de donnée de suivi technique ST4, et d'un nouveau bloc de données de suivi d'usage SM3. L'utilisateur a cessé de naviguer mais la charge des ressources du terminal n'est pas encore stabilisée. Les données de suivi ne sont donc pas transmises.

En figure 4e, l'utilisateur continue de regarder le programmé vidéo, et l'interface reste identique. Des nouveaux blocs de données de suivi technique ST5, ST6 sont générés, par exemple générés de façon périodique. La charge des ressources s'étant stabilisée, des blocs de données de suivi, SM1, SM2, ST1, ST2 sont transmis (et donc retirés de la mémoire tampon représentée sur la figure).

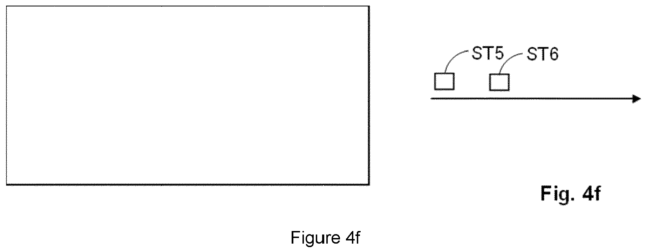

En figure 4f, l'interface reste identique. Un nouveau bloc de données de suivi technique ST7 est généré. Les blocs de données de suivi SM3, ST3, ST4 sont transmis.

On remarque que dans l'état de charge stabilisée des ressources, la file d'attente est consommée.

Les données de suivi sont transmises vers les serveurs de suivi appropriés au moment opportun où la charge des ressources est basse et stabilisée. Dans la mesure où le suivi ne nécessite pas un traitement en temps réel, ce retard de transmission (latence) ne pose pas de problème particulier. En outre, les données de suivi peuvent être horodatées, ce qui rend leur valeur indépendante du moment de leur transmission effective par le terminal de lecture 10.

Selon un mode de réalisation de l'invention, les données de suivi peuvent être également transmises lorsque l'utilisateur manifeste une intention de fermer l'application.

Pour ce faire, l'application peut être adaptée pour
- surveiller la localisation d'un pointeur dans l'interface homme-machine associée au terminal de lecture, et
- déclencher la transmission d'au moins une partie desdites données de suivi vers l'au moins un serveur de suivi lorsque cette localisation est dans une zone prédéterminée.

La zone prédéterminée correspond à une zone autour d'une icône ou menu dont la sélection entraine la fermeture de l'application. Sur la figure 4, cette icône est indiquée par la référence « Exit ». Lorsque l'utilisateur pointe une zone autour de cette icône, cela peut être interprété par une intention de fermer l'application. Selon un mode de réalisation la direction du mouvement du pointeur peut également être pris en compte pour interpréter l'intention de l'utilisateur.

Le but de cette mise en oeuvre est d'éviter qu'un trop grand nombre de données de suivi soient perdues du fait de cette fermeture. Dans cette situation, on peut considérer que la performance de la réception du flux multimédia et de l'interactivité de l'interface homme-machine sont moins importants (puisque l'utilisateur souhaiter quitter l'application) que la transmission des données de suivi. Le bloc fonctionnel 13 transmet alors les données de suivi mémorisées dans la mémoire tampon

Selon un mode de réalisation, une transmission de données de suivi peut également être déclenchée lorsque la mémoire tampon 14 est remplie au-delà d'un certain seuil.

Selon un mode de réalisation, une transmission d'un bloc de données de suivi peut également être déclenchée lorsque ce bloc est mémorisé depuis une date trop ancienne (c'est-à-dire depuis une durée qui dépasse un seuil donné).

Bien entendu, la présente invention n'est pas limitée aux exemples et au mode de réalisation décrits et représentés, mais est défini par les revendications. Elle est notamment susceptible de nombreuses variantes accessibles à l'homme de l'art.

## Revendications

1. Procédé de supervision d'un terminal de lecture (10 ; MOB, TV, ORD) de flux multimédia, à travers un réseau de télécommunication (NET), comportant des étapes de :
- recueil de données de suivi destinées à au moins un serveur de suivi (S_{TT}, S_{TM}) connecté audit réseau de télécommunication (NET),
- mémorisation desdites données de suivi dans une mémoire tampon (14) dudit terminal de lecture,
- vérification d'un critère de charge des ressources dudit terminal de lecture (10 ; MOB, TV, ORD),
- transmission d'au moins une partie desdites données de suivi vers ledit au moins un serveur de suivi (S_{TT}, S_{TM}) lorsque ledit critère est rempli.

2. Procédé de supervision selon la revendication précédente, dans lequel on mémorise de façon distinctive des données d'un premier type et des données d'un second type, et dans lequel, lesdites données d'un premier type sont transmises en priorité lorsque ledit critère est rempli.

3. Procédé de supervision selon la revendication précédente dans lequel on mémorise les données du premier type et les données du second type dans deux mémoires tampon distinctes.

4. Procédé de supervision selon l'une des revendications précédentes, dans lequel lesdites ressources comprennent une charge des circuits de traitement dudit terminal (10).

5. Procédé de supervision selon l'une des revendications précédentes, dans lequel lesdites ressources comprennent une bande-passante vers ledit réseau de télécommunication (NET).

6. Procédé de supervision selon l'une des revendications précédentes, dans lequel ledit critère de charge comprend le maintien d'une charge au-dessous d'un seuil donné pendant une période donnée.

7. Procédé de supervision selon l'une des revendications précédentes, comportant des étapes de
- surveillance de la localisation d'un pointeur dans une interface homme-machine dudit terminal de lecture, et
- déclenchement de la transmission d'au moins une partie desdites données de suivi vers ledit au moins un serveur de suivi lorsque ladite localisation est dans une zone prédéterminée.

8. Terminal de lecture (10 ; MOB, TV, ORD) de flux multimédia comprenant au moins une interface vers un réseau de télécommunication (NET) et comprenant un processeur configuré pour réaliser les étapes suivantes :
- recueil de données de suivi destinées à au moins un serveur de suivi (S_{TT}, S_{TM}) connecté audit réseau de télécommunication (NET),
- mémorisation desdites données de suivi dans une mémoire tampon (14) dudit terminal de lecture,
- vérification d'un critère de charge des ressources dudit terminal de lecture (10 ; MOB, TV, ORD),
- transmission d'au moins une partie desdites données de suivi vers ledit au moins un serveur de suivi (S_{TT}, S_{TM}) lorsque ledit critère est rempli.

9. Programme d'ordinateur apte à être mis en oeuvre sur un terminal de lecture de flux multimédia, le programme comprenant des instructions de code qui, lorsqu'il est exécuté par un processeur, réalise les étapes du procédé définie dans les revendications 1 à 7.

10. Support de données sur lequel a été mémorisé au moins une série d'instructions de code de programme pour l'exécution d'un procédé selon l'une des revendications 1 à 7.
